# EUROPEAN PATENT APPLICATION

(11) **EP 1 553 313 A1**
(43) Date of publication of application: **13.07.2005**
(21) Application number: 03764165.1
(22) Date of filing: 10.07.2003
(51) Int. Cl.: F16C 7/02

(54) **CONNECTING ROD SPLIT CONSTRUCTION**

(30) Priority: 11.07.2002 JP 2002202203
(71) Applicant: YAMAHA HATSUDOKI KABUSHIKI KAISHA, Iwata-shi, Shizuoka 438-8501 (JP)
(72) Inventor: KUBOTA, Tsuyoshi YAMAHA HATSUDOKI KABUSHIKI KAISHA, Iwata-shi, Shizuoka 438-8501 (JP); IWASAKI, Shinya YAMAHA HATSUDOKI KABUSHIKI KAISHA, Iwata-shi, Shizuoka 438-8501 (JP)
(74) Representative: Grünecker, Kinkeldey, Stockmair & Schwanhäusser Anwaltssozietät
(86) International application number: PCT/JP2003/008808
(87) International publication number: WO 2004/007980

(57) **Abstract**

A connecting rod split construction made by applying a surface hardening treatment to a large end (1b) having a crank pin hole (1d), splitting the large end (1b) into a rod (2) and a cap (3), and joining the rod (2) and the cap (3) to each other with their split surfaces put together and properly positioned by an engaging bolt (4), wherein the inner peripheral surface of the crank pin hole (1d) of the large end (1b) is formed with an axially extending break starting point (5), whose axial length (L1) is less than the axial length (L2) of the inner peripheral surface.

## Description

### Technical Field

This invention relates to a breaking and splitting structure of a connecting rod in which a large end treated by carburizing and hardening is broken and split into a rod section and a cap section and the rod and cap sections are coupled with fastening bolts, with their broken and split surfaces aligned with each other.

### Background Art

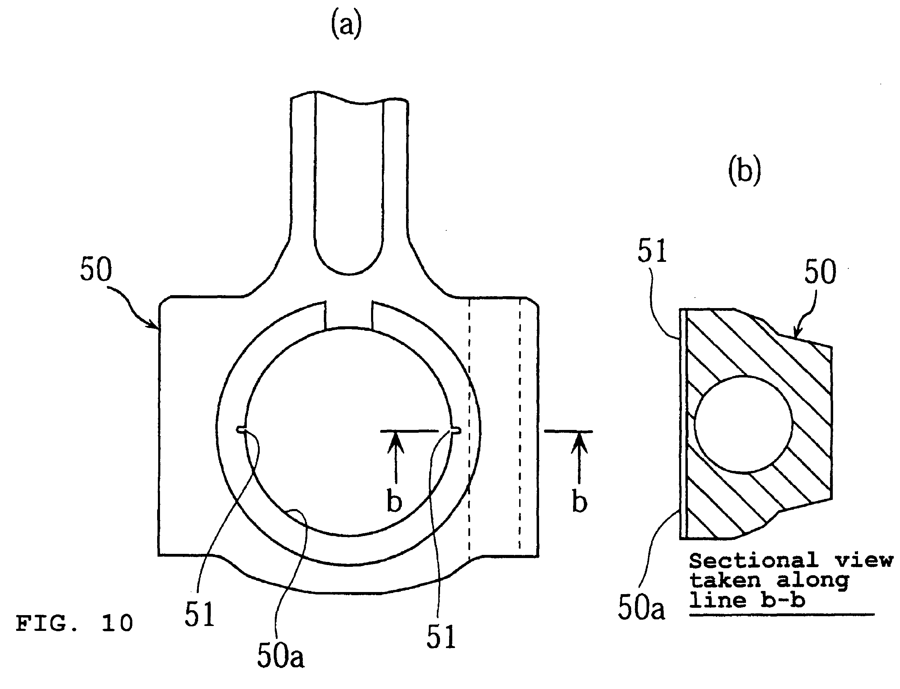

In some split type connecting rods, a breakage-starting groove for inducing a breakage is provided before its large end is broken and split into a rod section and a cap section. For example, as shown in Figs. 10(a) and 10(b), there has been suggested a structure in which breakage-starting grooves 51, 51 are formed by cutting out in the inside circumferential surface of a crank pin bore 50a of a large end 50, extending linearly in the axial direction of the crank pin bore through the inside circumferential surface from one end to the other (see U.S. Patent No. 4,569,109).

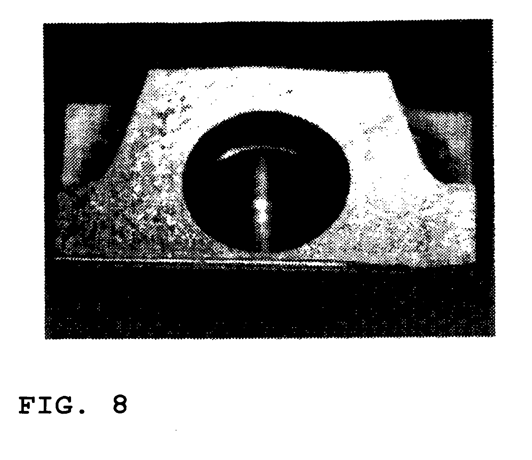

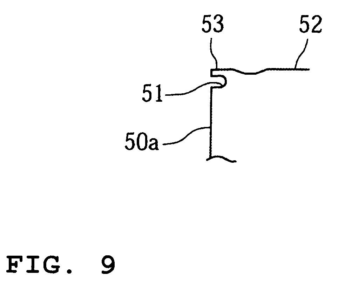

However, when such a conventional structure is adopted in which breakage-starting grooves are formed in the inside circumferential surface of the large end through the inside circumferential surface from one end to the other, part of the broken and split surface may be formed at a location off the breakage-starting portion, as shown in Fig. 8. If the broken and split surface is displaced from the breakage-starting groove as described above, a flake-like burr 53 may be produced between the broken and split surface 52 and the breakage-starting groove 51, as shown in Fig. 9, which might cause an engine trouble such as damage or seizure inside the engine when such a burr 53 chips off and falls during engine operation.

On the other hand, in the case where a broken and split surface is formed along the entire length of the breakage-starting groove, flatness of the broken and split surfaces between the rod and cap sections increases, although no burr 53 is produced. Therefore, positional reproducibility might be worsened when the rod and cap sections are assembled to the crank pin, after they are broken off, coupled together for the fine boring of the crank pin bore of the large end, and then separated for the assembly. As a result, no sufficient roundness or cylindricity of the large end is obtained when it is assembled to the crankshaft, which might cause wear or seizure inside the engine or increase horsepower loss.

In view of the foregoing, an object of this invention is to provide a breaking and splitting structure of a connecting rod capable of preventing generation of burrs when the broken and split surface is displaced from the breakage-starting groove and deterioration of reproducibility in aligning the broken and split surfaces with each other, and thus preventing an engine trouble.

### Disclosure of the Invention

The invention of claim 1 is directed to a breaking and splitting structure of a connecting rod such that surface hardening treatment is applied to a large end having a crank pin bore, the large end is broken and split into a rod section and a cap section, and the rod and cap sections are coupled with fastening bolts, with their broken and split surfaces engaged and aligned with each other, in which a breakage-starting portion extending in the axial direction of the crank pin bore is formed in an inside circumferential surface of the crank pin bore of the large end, and the axial length of the breakage-starting portion is set smaller than the axial length of the inside circumferential surface.

The invention of claim 2 is directed to the invention of claim 1, in which, of an intersection of the broken and split surface and the inside circumferential surface, a part where the breakage-starting portion is formed coincides with the breakage-starting portion, while most of the other part deviates from an extension of the breakage-starting portion.

The invention of claim 3 is directed to the invention of claim 1 or 2, in which shoulders of the large end are each formed with a bolt hole extending in the direction perpendicular to the axis of the crank pin bore, and the bolt hole is formed close to the crank pin bore so that the thickness between the bolt hole and the inside circumferential surface is smaller than the thickness between the bolt hole and an outside wall.

The invention of claim 4 is directed to the invention of any one of claims 1 - 3, in which one end of the breakage-starting portion is positioned at one end of the crank pin bore in the axial direction.

The invention of claim 5 is directed to the invention of claim 4, in which the other end of the breakage-starting portion is positioned closer to the one end of the crank pin bore than to the bolt hole.

The invention of claim 6 is directed to the invention of claim 4 or 5, in which the breakage-starting portion is constituted by a tapered groove formed by machining.

The invention of claim 7 is directed to the invention of claim 4 or 5, in which the breakage-starting portion is constituted by a large number of pores formed successively at given intervals by laser machining.

The invention of claim 8 is directed to the invention of any one of claims 1 - 3, in which one end and other end of a breakage-starting portion are positioned on both sides of a line so as to overstride the line connecting axes of the bolt holes and extending in the direction perpendicular to the axis of the crank pin hole, and a length of the breakage-starting portion is set generally equal to or smaller than the diameter of the bolt hole.

The invention of claim 9 is directed to the invention of any one of claims 1 - 3, in which the breakage-starting portion is formed at a position generally in agreement with the line a connecting the axes of the bolt holes and extending in the direction perpendicular to the axis of the crank pin hole.

The invention of claim 10 is directed to the invention of claim 8 or 9, in which the breakage-starting portion is constituted by a large number of pores formed successively at given intervals by laser machining.

### Brief Description of Drawings

Fig. 1 is a view partly in section of a large end of a connecting rod according to an embodiment of this invention.
Fig. 2 is a view showing the large end in an intermediate stage of a manufacturing process.
Fig. 3 is a sectional view of the large end (sectional view taken along line III - III of Fig. 2).
Fig. 4 is a flowchart of the manufacturing process of the connecting rod.
Fig. 5 is a sectional view of a breakage-starting portion according to an embodiment of the invention of claim 6.
Fig. 6 is a sectional view of a breakage-starting portion according to an embodiment of the invention of claim 7.
Fig. 7 is a view showing a broken surface of the breakage-starting portion.
Fig. 8 is a view showing a broken surface of a conventional large end.
Fig. 9 is a view illustrating a trouble in the prior art.
Fig. 10 is views illustrating a conventional breaking and splitting method.
Fig. 11 is a partial sectional view of the large end of a connecting rod according to an embodiment of the invention of claim 8.
Fig. 12 is a partial sectional view of the large end of a connecting rod according to an embodiment of the invention of claim 9.

### Best Mode for Carrying Out the Invention

Now, an embodiment of this invention will be described below with reference to the accompanying drawings.

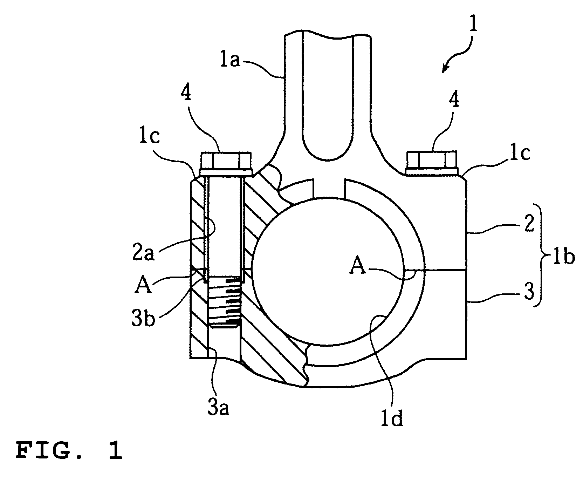

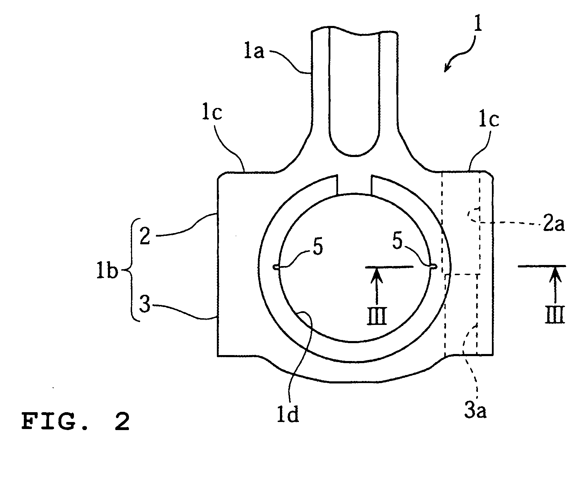

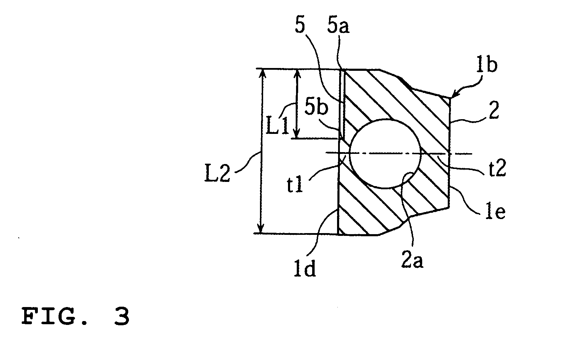

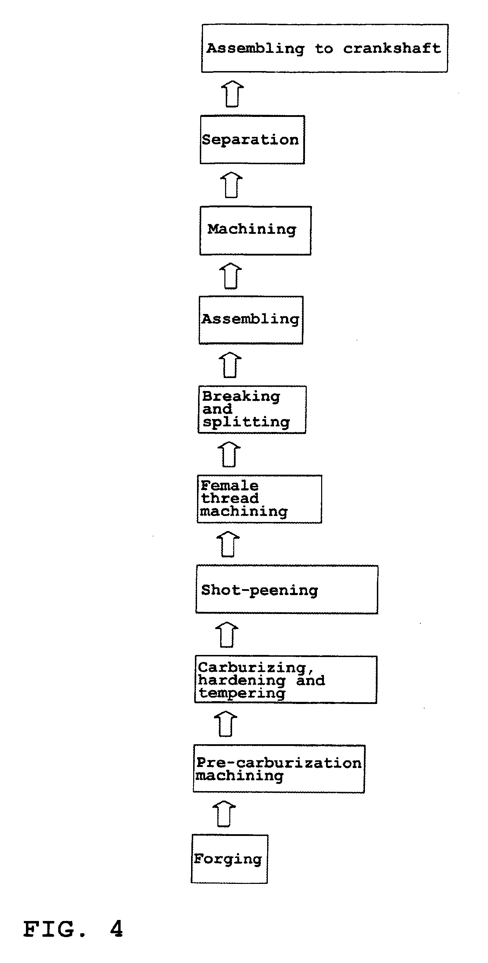

Fig. 1 - Fig. 4 are views illustrating a breaking and splitting structure of a connecting rod according to an embodiment of the inventions of claims 1 - 5; Fig. 1 is a view partly in section of a large end of a connecting rod; Fig. 2 is a view showing the large end in an intermediate stage of a manufacturing process; Fig. 3 is a sectional view of a breaking and splitting portion of the large end (sectional view taken along line III - III of Fig. 2); and Fig. 4 is a flowchart of the manufacturing process of the connecting rod.

A connecting rod 1 in this embodiment is of a nut-less type formed by forging or casting, and configured such that it is integrally formed, at one end of a rod body 1a, with a small end to which an unillustrated piston pin is connected, and, at the other end, with a large end 1b to which an unillustrated crank pin is connected. The large end 1b has shoulders 1c, 1c extending outward from the connecting portion with the rod body 1a, and a crank pin bore 1d formed in the center of the large end 1b.

A rod section 2 and a cap section 3, of the large end 1b, are formed integrally in advance, surface hardening treatment of carburizing, hardening and tempering is applied to the whole connecting rod including the large end 1b, and then the large end 1b is broken and split into the rod section 2 and the cap section 3 along an expected breakage line A. These split rod and cap sections 2, 3 are coupled with fastening bolts 4, 4, with their broken and split surfaces engaged and aligned with each other. As a result of the surface hardening treatment, there is formed a hardened surface layer having a given depth of carburization on the outer surface of the connecting rod 1.

There are formed bolt holes 2a, 2a with a diameter slightly larger than that of the fastening bolt 4 in the shoulders 1c of the rod section 2. A female threaded hole 3a, which is coaxial with the bolt hole 2a, is formed through the bottom 3b of the cap section 3 below the bolt hole 2a. The fastening bolt 4 is inserted into the bolt hole 2a and engaged with the female threaded hole 3a, coupling the rod and cap sections 2, 3 together.

The bolt hole 2a extends in the direction perpendicular to the axis of the crank pin bore 1d, and is located close to the crank pin bore 1d. That is, the thickness t1 between the bolt hole 2a and the inside circumferential surface of the crank pin bore 1d is smaller than the thickness t2 between the bolt hole 2a and the outside wall 1e of the shoulder 1c. The thickness t2 is set to such a value as required in terms of strength to withstand the combustion pressure of the engine.

A pair of breakage-starting portions 5, 5 are formed in the inside circumferential surface of the crank pin bore 1d, and extend in the axial direction of the crank pin bore 1d. The breakage-starting portion 5 is constituted by a cut-out groove formed by machining, along an intersection line on which an expected breakage plane A of the rod and cap sections 2, 3 of the large end 1b and the inside wall surface intersect.

The axial length L1 of each breakage-starting portion 5 is set smaller than the axial length L2 of the crank pin bore 1d. In addition, one end 5a of the breakage-starting portion 5 is positioned at one end of the crank pin bore 1d in the axial direction, and the other end 5b is positioned near the axial middle of the crank pin bore 1d, more specifically, at a position closer to the one end 5a than to said middle.

A method of manufacturing the connecting rod will be described with reference to the flowchart of Fig. 4.

A raw blank of the connecting rod 1 is formed by forging. At this time, the rod section 2 and the cap section 3 of the large end 1b are formed integrally. By pre-carburization machining, a bolt hole 2a is formed in each shoulder 1c of the connecting rod 1, as well as a breakage-starting portion 5 constituted by a cut-out groove is formed in the inside circumferential surface of the crank pin bore 1d. The breakage-starting portion 5 is formed so as to extend from one axial end of the crank pin bore 1d to a position slightly closer to the one axial end than to said middle of the crank pin bore 1d.

Surface hardening treatment including carburizing, hardening and tempering is applied to the connecting rod 1 in this stage to form a hardened surface layer in the surface of the connecting rod 1. Thereafter, the connecting rod 1 is put through a shot-peening process, and a cutting tool is inserted into the bolt hole 2a to machine the female threaded hole 3a.

Then, the large end 1b is broken with a jig and split into the rod section 2 and the cap section 3. This breaking and splitting is performed in such a way that sliders movable in the radial directions, for example, are inserted in the crank pin bore 1d of the large end 1b and a wedge is driven between the sliders.

Of the intersection on which the broken and split surface formed by the foregoing splitting action and the inside circumferential surface of the crank pin bore 1d intersect, a part where the breakage-starting portion 5 is formed extends along the breakage-starting portion 5, while most of the other part deviates from the extension of the breakage-starting portion 5.

The broken and split surfaces of the rod and cap sections 2, 3 formed in this way are aligned with each other, and, at the same time, both sections are fastened with fastening bolts 4, 4 to be coupled together. Final machining of the crank pin bore 1d is performed with the rod and cap sections coupled together. Thereafter, the cap section 3 is removed and separated from the rod section 2, followed by assembly of the large end 1b to the crankshaft.

In this embodiment, as described above, a pair of axially extending breakage-starting portions 5 are formed by cutting out in the inside circumferential surface of the crank pin bore 1d of the large end 1b, and the cut-out length L1 of each breakage-starting portion 5 is smaller than the axial length L2 of the crank pin bore 1d. Therefore, the broken surface is formed along the breakage-starting portion 5 in a part where the breakage-starting portion 5 is formed, while the broken surface deviates from the extension of the breakage-starting portion 5 in most of the other part where no breakage-starting portion 5 is formed. No burr is produced by this deviation. As a result, it is possible to prevent an engine trouble such as damage and seizure due to falling of burrs during engine operation.

Also, in this embodiment, the intersection (corner edge) of the broken and split surface of the rod and cap sections 2, 3 and the inside circumferential surface of the crank pin bore 1d is formed along the breakage-starting portion 5 in a part where the breakage-starting portion 5 is formed, while the intersection extends in the direction not in agreement with that of the extension of the breakage-starting portion in most of the other part. Therefore, the broken and split surface can be formed in a three-dimensional irregular shape, accurate alignment of the rod and cap sections 2, 3 can be achieved when their broken and split surfaces are engaged with each other, and reproducibility can be enhanced at the time of assembly to the crankshaft. As a result, roundness and cylindricity after engine assembly can be secured, wear and seizure can be prevented, and horsepower loss can be reduced.

In this embodiment, the bolt hole 2a of the large end 1b is formed close to the crank pin bore 1d. Therefore, the width of the shoulders of the large end 1b can be decreased while the thickness t2 between the bolt hole 2a and the outside wall 1e is securely large as required in terms of strength, allowing size and weight reduction of the connecting rod.

In this embodiment, one end 5a of the breakage-starting portion 5 is positioned at one axial end of the crank pin bore 1d, which allows the broken and split line to coincide with an expected breakage line.

Further, the other end 5b of the breakage-starting portion 5 is positioned in the axial middle of the crank pin bore 1d, that is, at a position closer to the one end 5a than to the bolt hole 2a. Therefore, the broken and split surface coincides with the breakage-starting portion 5 in a part where the breakage-starting portion 5 is formed, while the broken and split surface deviates from the extension of the breakage-starting portion 5 in a part where no breakage-starting portion 5 is formed. Further, the other end 5b is positioned closer to the one end 5a than to said middle, that is, at a position not further than said middle. Therefore, when the thickness t1 between the crank pin bore 1d and the bolt hole 2a is decreased, the portion with the decreased thickness t1 is prevented from being decreased further in thickness and workability can be improved in machining the breakage-starting portion 5.

Although the length L1 of the breakage-starting portion 5 is determined as from one end of the crank pin bore 1d to a position slightly short of the middle in this embodiment, this invention is not limited to that. For example, the breakage-starting portion may be formed only at the axial end of the crank pin bore, or may be formed to extend beyond the middle. In short, the length of the breakage-starting portion may be set such that the broken surface is formed reliably along the breakage-starting portion in a part where the breakage-starting portion is formed, in order to prevent generation of burrs.

Although this embodiment is described as a case where breakage-starting portions 5 are formed by machining into grooves of the same depth, this invention is not limited to that.

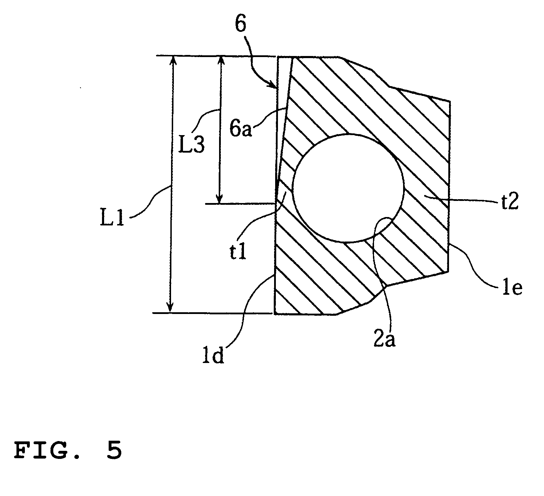

Fig. 5 is an example in which a tapered groove 6a is formed as a breakage-starting portion 6 by broaching, which corresponds to the invention of claim 6. When the breakage-starting portion 6 is formed by the tapered groove 6a, workability can be improved compared with when a cut-out groove of a uniform depth is formed, and the depth of the groove at the inner end can be decreased. Therefore, even when the thickness t1 between the crank pin bore 1d and the bolt hole 2a is small, the length L3 of the breakage-starting portion 6 can be set such that the breakage-starting portion extends beyond the portion with the decreased thickness t1.

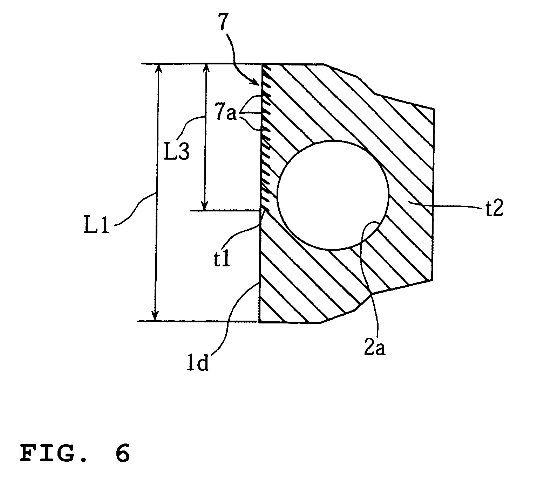

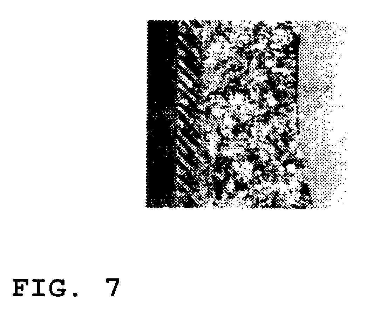

Fig. 6 and Fig. 7 show an example in which a large number of pores 7a are formed successively at given intervals by laser machining as a breakage-starting portion 7, which corresponds to the invention of claim 7. When the breakage-starting portion 7 is formed by laser machining, the breakage-starting portion 7 can be formed accurately and easily.

Also, it is possible that the inside circumferential surface is melted by a heated wire to form a breakage-starting portion, though not shown in the figure.

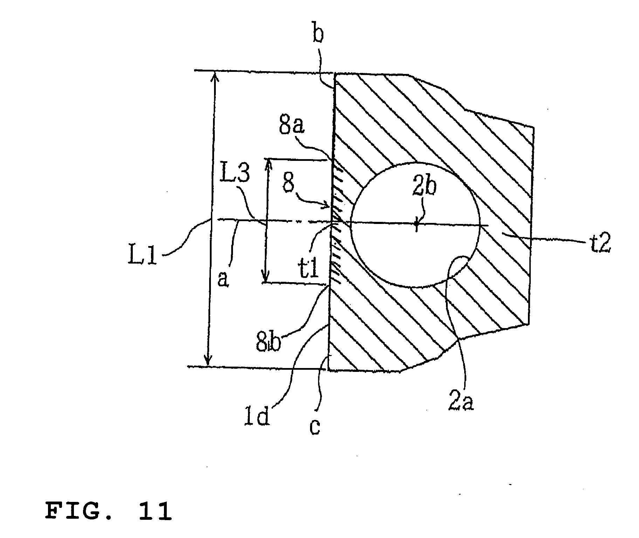

Fig. 11 is a view illustrating an embodiment of the invention of claim 8.

In this embodiment, one end 8a and the other end 8b of a breakage-starting portion 8 are positioned on both sides of a line a so as to overstride the line a, which connects axes 2b of the bolt holes 2a and extends in the direction perpendicular to the axis of the crank pin hole 1d. The length L3 of the breakage-starting portion 8 is set generally equal to or smaller than the diameter of the bolt hole 2a. Although the above-described breakage-starting portion 8 is constituted by a large number of pores formed successively at given intervals by laser machining, the processing method of the breakage-starting portion 8 is not limited to laser machining.

In this embodiment, the breakage-starting portion 8 has generally the same length as or a smaller length than the diameter of the bolt hole 2a, and is positioned in the vicinity of the axis of the bolt hole. Therefore, a breakage starts only in a part where the breakage-starting portion 8 is formed, and then extends to other parts b and c. Since a breakage starts at one point in the vicinity of the axis and it is not the case that breakages having started at different points join, which often accompanies generation of burrs, it is possible to reliably prevent generation of burrs.

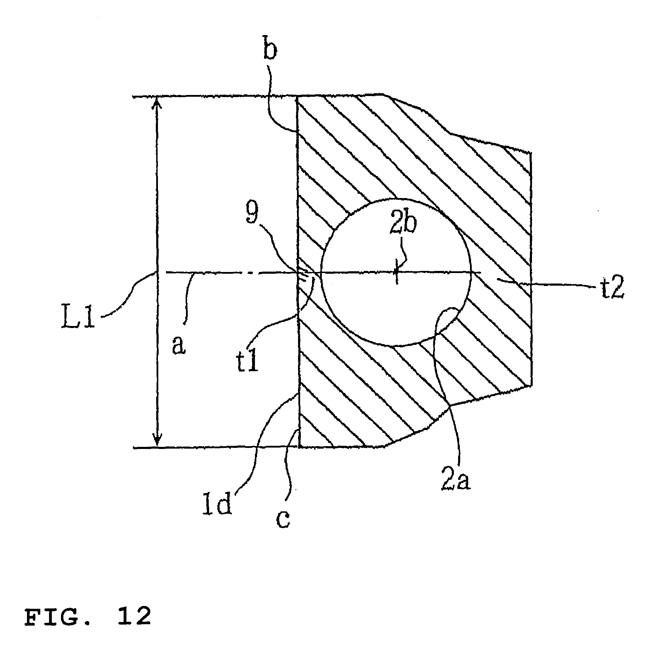

Fig. 12 is a view illustrating an embodiment of the invention of claim 9.

In this embodiment, a breakage-starting portion 9 is formed at a position generally in agreement with the line a connecting the axes 2b of the bolt holes 2a and extending in the direction perpendicular to the axis of the crank pin hole 1d.

In this embodiment, since the breakage-starting portion 9 is formed only in the middle of the bolt hole 2a, a breakage starts only in a part where the breakage-starting portion 9 is formed, and then extends to the other parts b and c. Therefore, since it is not the case that breakages having started at different points join, which often accompanies generation of burrs, it is possible to reliably prevent generation of burrs.

### Industrial Applicability

In the breaking and splitting structure of a connecting rod according to the invention of claim 1, a breakage-starting portion extending in the axial direction of the crank pin bore is formed in the inside circumferential surface of the crank pin bore of a large end, and the axial length of the breakage-starting portion is set smaller than the axial length of the inside circumferential surface. Therefore, the broken and split surface is formed along the breakage-starting portion, not in a location off the breakage-starting portion, in a part where the breakage-starting portion is formed, while no burr is produced by the broken and split surface in the other part where no breakage-starting portion is formed. As a result, it is possible to prevent an engine trouble such as damage or seizure inside the engine due to the falling of a burr during engine operation.

In the invention of claim 2, of the intersection of the broken and split surface and the inside circumferential surface, the other part where no breakage-starting portion is formed deviates from the extension of the breakage-starting portion. Therefore, the broken and split surface has a three-dimensional irregular shape, so that accurate alignment can be performed when the broken and split surfaces of the rod and cap sections are engaged with each other, and reproducibility of roundness and cylindricity can be enhanced during assembly to the crankshaft. As a result, roundness and cylindricity after engine assembly can be secured, wear and seizure can be prevented, and horsepower loss can be reduced.

In the invention of claim 3, since the bolt hole of the large end is formed close to the crank pin bore, the width of the shoulders of the large end can be decreased while a necessary thickness is secured between the bolt hole and the outside wall, allowing size and weight reduction of the connecting rod.

In the invention of claim 4, since one end of the breakage-starting portion is positioned at one end, in the axial direction, of the inside circumferential surface of the crank pin bore, a breakage at the time of splitting is caused to start reliably at the one end of the crank pin bore in the axial direction. Therefore, in a part where the breakage-starting portion is formed, splitting along the starting portion can be performed reliably, preventing generation of burrs more reliably.

In the invention of claim 5, the other end of the breakage-starting portion is positioned closer to the one end of the crank pin hole than to the bolt hole. Therefore, in the case that the thickness between the crank pin bore and the bolt hole is decreased, as in the invention of claim 3, for example, the portion with the decreased thickness is prevented from being decreased further in thickness.

In the invention of claim 6, since the breakage-starting portion is constituted by a tapered groove formed by machining, forming work of the breakage-starting portion is easy. Even when the breakage-starting portion is formed such that the other end of the breakage-starting portion is positioned beyond the bolt hole, the portion with the decreased thickness is prevented from being decreased excessively in thickness.

In the invention of claim 7, 10, since the breakage-starting portion is constituted by pores formed successively at given intervals by laser machining, the breakage-starting portion can be formed accurately and easily.

In the invention of claim 8, one end and other end of a breakage-starting portion are positioned on both sides of a line so as to overstride the line connecting axes of the bolt holes and extending in the direction perpendicular to the axis of the crank pin hole, and a length of the breakage-starting portion is set generally equal to or smaller than the diameter of the bolt hole. In the invention of claim 9, the breakage-starting portion is formed at a position generally in agreement with the line a connecting the axes of the bolt holes and extending in the direction perpendicular to the axis of the crank pin hole. Therefore, a breakage in breaking and splitting starts reliably in a part where the breakage-starting portion is formed. Since a breakage unlikely starts in another part where no breakage-starting portion is formed, it is not the case that breakages having started at different points join. As a result, it is possible to more reliably prevent generation of burrs.

## Claims

1. A breaking and splitting structure of a connecting rod such that surface hardening treatment is applied to a large end having a crank pin bore, the large end is broken and split into a rod section and a cap section, and the rod and cap sections are coupled with fastening bolts, with their broken and split surfaces engaged and aligned with each other, wherein a breakage-starting portion extending in the axial direction of the crank pin bore is formed in an inside circumferential surface of the crank pin bore of the large end, and the axial length of the breakage-starting portion is set smaller than the axial length of the inside circumferential surface.

2. The breaking and splitting structure of a connecting rod according to claim 1, wherein, of an intersection of the broken and split surface and the inside circumferential surface, a part where the breakage-starting portion is formed coincides with the breakage-starting portion, while most of the other part deviates from an extension of the breakage-starting portion.

3. The breaking and splitting structure of a connecting rod according to claim 1 or 2, wherein shoulders of the large end are each formed with a bolt hole extending in the direction perpendicular to the axis of the crank pin bore, and the bolt hole is formed close to the crank pin bore so that the thickness between the bolt hole and the inside circumferential surface is smaller than the thickness between the bolt hole and an outside wall.

4. The breaking and splitting structure of a connecting rod according to any one of claims 1 - 3, wherein one end of the breakage-starting portion is positioned at one end of the crank pin bore in the axial direction.

5. The breaking and splitting structure of a connecting rod according to claim 4, wherein the other end of the breakage-starting portion is positioned closer to the one end of the crank pin bore than to the bolt hole.

6. The breaking and splitting structure of a connecting rod according to claim 4 or 5, wherein the breakage-starting portion is constituted by a tapered groove formed by machining.

7. The breaking and splitting structure of a connecting rod according to claim 4 or 5, wherein the breakage-starting portion is constituted by a large number of pores formed successively at given intervals by laser machining.

8. The breaking and splitting structure of a connecting rod according to any one of claims 1 - 3, wherein one end and other end of the breakage-starting portion are positioned on both sides of a line so as to overstride the line connecting axes of the bolt holes and extending in the direction perpendicular to the axis of the crank pin hole, and wherein a length of the breakage-starting portion is set generally equal to or smaller than the diameter of the bolt hole.

9. The breaking and splitting structure of a connecting rod according to any one of claims 1 - 3, wherein a breakage-starting portion is formed at a position generally in agreement with the line a connecting the axes of the bolt holes and extending in the direction perpendicular to the axis of the crank pin hole.

10. The breaking and splitting structure of a connecting rod according to claim 8 or 9, wherein the breakage-starting portion is constituted by a large number of pores formed successively at given intervals by laser machining.
